# FASCICULE DE BREVET EUROPEEN

(11) **EP 2 961 955 B1**
(45) Date de publication et mention de la délivrance du brevet: **05.04.2017**
(21) Numéro de dépôt: 14709999.8
(22) Date de dépôt: 13.02.2014
(51) Int. Cl.: F01N 3/20, F01N 11/00, F01N 3/035

(54) **PROCEDE DE DETECTION D'UN DYSFONCTIONNEMENT D'UN SYSTEME DE REDUCTION CATALYTIQUE SELECTIVE**
VERFAHREN ZUR ERKENNUNG EINER FEHLFUNKTION EINES SYSTEMS FÜR SELEKTIVE KATALYTISCHE REDUKTION
METHOD FOR DETECTING A MALFUNCTION OF A SELECTIVE CATALYTIC REDUCTION SYSTEM

(30) Priorité: 01.03.2013 FR 1351864
(43) Date de publication de la demande: 06.01.2016
(73) Titulaire: Peugeot Citroën Automobiles SA, 78140 Vélizy Villacoublay (FR)
(72) Inventeur: JUMEL, Guillaume, F-78290 Croissy sur Seine (FR); ARTAULT, Mathieu, F-92700 Colombes (FR)
(74) Mandataire: Renous Chan, Véronique
(86) Numéro de dépôt international: PCT/FR2014/050282
(87) Numéro de publication internationale: WO 2014/131961

(56) Documents cités:
- EP-A1- 1 860 294
- DE-A1-102011 003 499
- US-A1- 2010 154 387
- US-A1- 2012 126 989

## Description

L'invention porte sur un procédé de détection d'un dysfonctionnement d'un système de réduction catalytique sélective dite « SCR », à réducteur liquide équipant une ligne d'échappement d'un véhicule automobile.

Le domaine technique de la présente invention est particulièrement la dépollution essence ou Diesel d'un véhicule comportant un moteur thermique. Plus particulièrement mais non limitativement, la présente invention est applicable à des moteurs Diesel avec un système SCR de dépollution des oxydes d'azote et comportant en outre au moins un filtre à particules.

Un système SCR pour Réduction Catalytique Sélective fonctionne par injection dans la ligne d'échappement d'un agent de dépollution dit réducteur SCR, cet agent étant avantageusement mais non limitativement de l'urée ou un dérivé de l'urée. L'injection d'un agent réducteur SCR, dans un catalyseur SCR intégré à la ligne d'échappement, neutralise une grande partie des oxydes d'azote selon des réactions chimiques qui seront ultérieurement mentionnées.

Contrairement à d'autres modes d'élimination des oxydes d'azote, comme par exemple un système de piège à NOx également désigné sous l'acronyme LNT pour « Lean NOx Trap » retenant les oxydes d'azote par réaction chimique puis les neutralisant par injection d'un surplus de carburant, le principal avantage d'un système SCR est de ne pas dépendre d'un ajout de carburant, étant donné que l'agent d'élimination des oxydes d'azote n'est pas un excès de carburant en provenance du moteur mais un agent réducteur ajouté dans la ligne d'échappement, par exemple de l'ammoniac initialement sous la forme d'urée ou d'un dérivé de l'urée. Ainsi, une consommation optimale de carburant est conservée, ce qui permet de maintenir les émissions de dioxyde de carbone ou CO² à un niveau optimal et de ne pas augmenter la dépense énergétique du véhicule.

Les véhicules à moteur thermique sont soumis à des normes de dépollution limitant les émissions de polluants, notamment mais pas seulement les oxydes d'azote. Afin de passer ces réglementations, il est possible de travailler sur les modes de combustion et/ou d'hybridation et/ou de traiter les polluants après leur émission.

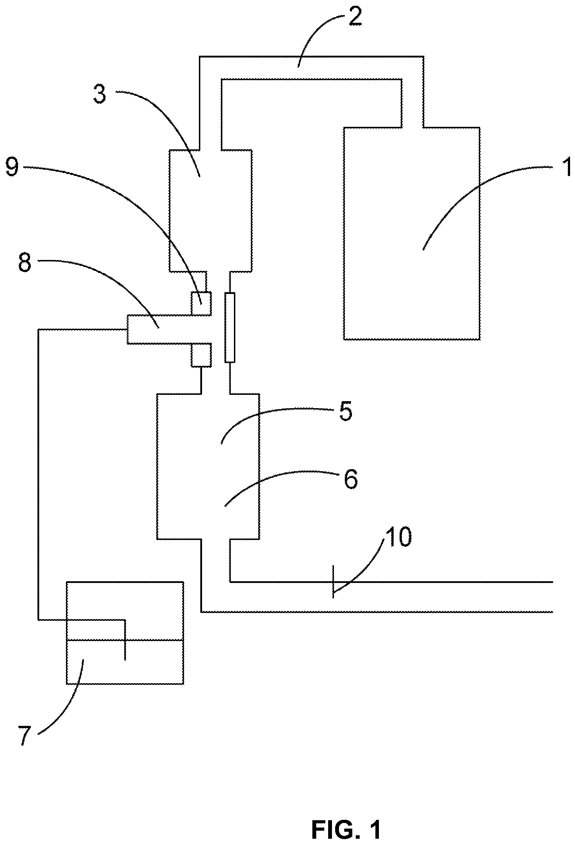

C'est ce que propose les moyens de dépollution placés dans la ligne 2 d'échappement sortant d'un moteur thermique 1 dans le mode de réalisation non limitatif montré à la figure 1 d'un moteur 1 et de sa ligne 2 d'échappement. Dans ce mode de réalisation, en partant de l'échappement du moteur les gaz d'échappement traverse un catalyseur d'oxydation 3 ou DOC. Un tel catalyseur d'oxydation 3 sert à la conversion des substances nocives produites lors de la combustion du carburant, principalement de l'oxyde de carbone CO et des hydrocarbures HC, et transforme par oxydation l'oxyde de carbone et les hydrocarbures imbrûlés en dioxyde de carbone ou CO² et en eau.

La ligne 2 d'échappement traverse ensuite un catalyseur 5 d'un système SCR, ce catalyseur 5 étant, dans ce mode de réalisation, intégré dans un filtre à particules 6 ou FAP. Le filtre à particules 6 présente avantageusement un substrat poreux servant au filtrage des gaz d'échappement, la taille des pores du substrat correspondant à la dimension minimale des particules à retenir qui sont présentes dans les gaz d'échappement, fréquemment des particules de suie.

Avantageusement, le substrat poreux est imprégné par la phase active du catalyseur SCR 5 sur laquelle s'effectue la transformation des oxydes d'azote sous l'action de l'ajout d'agent réducteur dans le catalyseur 5. Dans un autre mode de réalisation, le catalyseur SCR 5 peut être placé avant le filtre à particules 6, ces deux éléments étant cependant avantageusement regroupés dans un même ensemble.

L'agent réducteur SCR contribue à la réduction chimique des oxydes d'azote, ceci par transformation initiale, si besoin est, de l'agent réducteur de départ en ammoniac ou NH₃. Le plus fréquemment, l'agent réducteur est une solution aqueuse contenant de l'urée connue sous la marque AdBlue®. Dans le système SCR, cette solution aqueuse est contenue dans un réservoir d'urée 7 et est d'abord injectée par un injecteur 8 dans une boîte de mélange 9 ou mélangeur se trouvant avantageusement dans la ligne 2 d'échappement en amont du catalyseur SCR 5. Cette boîte de mélange 9 a pour but d'augmenter le temps de séjour de l'agent réducteur avec les gaz d'échappement et d'atomiser les gouttelettes de la solution aqueuse injectée par l'intermédiaire d'un ou de plusieurs impacteurs.

En raison de la température élevée, l'urée se décompose en ammoniac NH3 et en dioxyde de carbone CO² selon la réaction chimique :

CO(NH₂)₂ + H₂O → 2 NH₃ + CO²

L'ammoniac réagit à son tour avec les oxydes d'azote pour former, par une réaction de réduction, du diazote et de l'eau. Par exemple, avec le monoxyde d'azote, la réaction s'écrit :

4 NO + 4 NH₃ + O₂ → 4 N₂ + 6 H₂O

Une autre réaction avec le monoxyde d'azote et le dioxyde d'azote s'écrit :

2 NO + 4 NH₃ + 2NO₂ → 4 N₂ + 6 H₂O

Le désavantage d'un système SCR est que l'agent réducteur est stocké dans un réservoir 7 à proximité de la ligne 2 d'échappement puis injecté dans la ligne 2 d'échappement. Il peut exister ainsi deux causes possibles d'un dysfonctionnement d'un système SCR. La première cause est le vieillissement et/ou l'endommagement du système, par exemple le vieillissement de l'agent réducteur, le vieillissement et/ou l'endommagement de l'injecteur, de la pompe de gavage de l'injecteur etc. La seconde cause est l'encrassement, par exemple de la boîte de mélange, notamment ses impacteurs, cause à laquelle il est remédié lors d'une régénération du filtre à particules 6.

Le document GB-A-2 481 433 décrit un procédé pour la détermination d'une valeur de concentration d'oxydes d'azote en amont d'un système SCR dans un moteur Diesel, le moteur présentant, dans sa ligne d'échappement, un filtre à particules diesel et une sonde à oxydes d'azote en aval du catalyseur SCR. Il est effectué une comparaison entre l'estimation de la concentration en oxydes d'azote et la valeur de mesure et, dans le cas où ladite différence est supérieure à un seuil prédéterminé, la valeur de la concentration estimée d'oxydes d'azote est corrigée avec une valeur de correction de concentration d'oxydes d'azote.

Dans ce document, il est indiqué qu'un recalage précis de la mesure de la sonde peut avoir lieu juste après une régénération du filtre à particules, tout l'agent réducteur SCR ayant été désorbé du catalyseur SCR qui a donc, pendant un bref laps de temps, une efficacité nulle. Ce document ne donne cependant aucun renseignement quant à la détection d'un dysfonctionnement d'un système SCR, à la détermination de la cause du dysfonctionnement et à la manière de corriger ce dysfonctionnement.

Le document US2010/0154387 divulgue quant à lui un procédé de détection d'un dysfonctionnement d'un système de réduction catalytique sélective « SCR » à agent réducteur liquide équipant une ligne d'échappement d'un véhicule automobile, la ligne d'échappement comprenant en outre un filtre à particules régénéré à intervalles réguliers, des quantités cibles de réducteur SCR à injecter dans la ligne d'échappement étant déterminées en relation avec le fonctionnement du moteur à l'aide d'une cartographie d'injection.

Ce document ne donne cependant aucun renseignement quant à la détection d'un dysfonctionnement d'un système SCR, à la détermination de la cause du dysfonctionnement et à la manière de corriger ce dysfonctionnement.

Le problème à la base de la présente invention est de fournir un procédé de détection qui puisse détecter de manière simple et efficace un dysfonctionnement du système SCR équipant une ligne d'échappement d'un véhicule automobile, ce procédé permettant de déterminer si ce dysfonctionnement est dû à un simple encrassement du système ou se révèle plus complexe en étant provoqué par un vieillissement et/ou un endommagement du système.

Pour atteindre cet objectif, il est prévu, selon l'invention, un procédé de détection d'un dysfonctionnement d'un système de réduction catalytique sélective « SCR » à agent réducteur liquide équipant une ligne d'échappement d'un véhicule automobile, la ligne d'échappement comprenant en outre un filtre à particules régénéré à intervalles réguliers, des quantités cibles de réducteur SCR à injecter dans la ligne d'échappement étant déterminées en relation avec le fonctionnement du moteur à l'aide d'une cartographie d'injection, où il est procédé :
- dans un intervalle compris entre deux régénérations, au recensement du nombre de points de mesure de quantité de réducteur estimée avoir été injectée se trouvant en dehors d'une plage prédéterminée autour de la quantité cible alors en application, les quantités de réducteur estimées avoir été injectées étant mesurées au moins en fonction de la teneur en oxydes d'azote en sortie du système SCR,
- à la détermination d'un pourcentage du nombre de ces points de mesure en dehors de la plage prédéterminée par rapport au nombre total de points de mesure effectués pendant l'intervalle de régénération,
- si ce pourcentage dépasse un pourcentage maximal prédéterminé, recherche de la cause du dysfonctionnement du système SCR,
- la recherche se faisant juste après une régénération du filtre à particules et consistant en une comparaison de points de mesure sur une sélection de points de mesure avant et après la régénération du filtre à particules,
- si les quantités de réducteur estimées avoir été injectées aux points de mesure avant et après régénération sont les mêmes, réactualisation dans la cartographie d'injection des quantités cibles dans le sens d'une diminution du nombre de points de mesure en dehors de la plage prédéterminée.

L'effet technique est de pouvoir connaître la cause exacte d'un dysfonctionnement d'un système SCR, à savoir, d'une part, si le système SCR est simplement encrassé auquel cas une régénération du filtre à particules suffit au décrassage et le système SCR fonctionne de nouveau normalement ou, d'autre part, si le système SCR est plus sérieusement endommagé ou vieilli auquel cas les quantités cibles de réducteur SCR sont réactualisées. Selon la présente invention, il est profité d'une régénération du filtre particules pour identifier efficacement la cause exacte du dysfonctionnement. On profite ainsi d'une opération de maintien d'un système de dépollution présent dans la ligne d'échappement autre que le système SCR, à savoir le filtre à particules, opération se produisant régulièrement, afin de savoir s'il est nécessaire de réactualiser les quantités cibles contenues dans la cartographie d'injection du système SCR.

Avantageusement, la réactualisation de la cartographie s'effectue quand les points de mesure atteignent un nombre prédéterminé de points contenus dans la cartographie, la dérive moyenne des quantités estimées en dehors de la plage prédéterminée par rapport à la quantité cible alors en application étant calculée et les quantités cibles de la cartographie étant réactualisées en leur ajoutant l'inverse de cette dérive moyenne.

Avantageusement, le nombre prédéterminé de points de mesure est égal au quart du total des points contenus dans la cartographie, sous condition d'une dispersion suffisante des points de mesure.

Avantageusement, la plage prédéterminée autour de la quantité cible correspond à l'erreur absolue acceptable pour l'injection d'une quantité de réducteur SCR.

Avantageusement, le pourcentage maximal prédéterminé est de 5%.

Avantageusement, la sélection de points de mesure avant et après la régénération du filtre à particules est faite parmi les points de mesure de quantité de réducteur estimée avoir été injectée différant de la quantité cible en application.

Avantageusement, la sélection de points de mesure avant et après la régénération du filtre à particules est faite parmi les points de mesure de quantité de réducteur estimée avoir été injectée se trouvant en dehors de la plage prédéterminée autour de la quantité cible en application.

L'invention concerne aussi une ligne d'échappement d'un véhicule automobile, présentant des moyens de dépollution des gaz d'échappement comprenant un filtre à particules, un catalyseur de réduction sélective SCR à réducteur liquide et au moins une sonde à oxydes d'azote aussi appelée sonde à NOx disposée en aval du catalyseur SCR dans la ligne d'échappement, le catalyseur SCR faisant partie d'un système SCR comprenant aussi une réserve de liquide SCR et un injecteur pour l'introduction de réducteur liquide dans la ligne d'échappement en amont du catalyseur SCR, le système SCR comprenant aussi un calculateur pour la détermination de quantités cibles de réducteur SCR à injecter dans la ligne d'échappement en relation avec le fonctionnement du moteur à l'aide d'une cartographie d'injection, caractérisée en ce que la détection d'un dysfonctionnement du système SCR est réalisée conformément à un tel procédé.

Avantageusement, le filtre à particules et le catalyseur SCR sont regroupés dans un même ensemble.

Avantageusement, le substrat poreux servant de filtre au filtre à particules est imprégné par la phase active du catalyseur SCR sur laquelle s'effectue l'élimination des oxydes d'azote sous l'action d'ajout d'agent réducteur dans le catalyseur.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une coupe longitudinale d'un moteur thermique et de sa ligne d'échappement comprenant divers moyens de dépollution, notamment un système SCR dont le fonctionnement peut être contrôlé conformément à un procédé de détection d'un dysfonctionnement selon la présente invention,
- la figure 2 est une représentation schématique d'un algorithme à la base du procédé de détection d'un dysfonctionnement d'un système SCR, ce procédé étant conforme à la présente invention.

La figure 1 a déjà été détaillée dans la partie introductive de la présente demande de brevet.

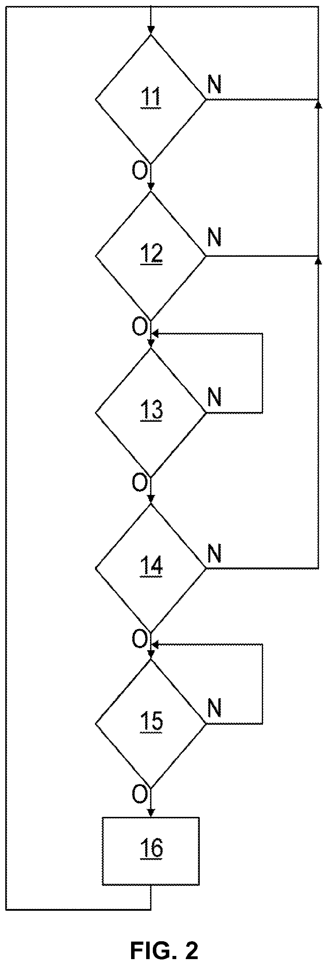

La figure 2 montre les différentes étapes d'un procédé de détection d'un dysfonctionnement d'un système SCR à agent réducteur SCR liquide équipant une ligne d'échappement d'un véhicule, ce procédé étant conforme à la présente invention. Dans ce qui suit, il sera aussi fait référence à la figure 1 pour référencer les divers éléments de dépollution ou de contrôle nécessaires pour la mise en oeuvre du procédé.

Pour la mise en oeuvre du procédé de détection, la ligne 2 d'échappement comprend en outre un filtre à particules 6 régénéré à intervalles réguliers et un moyen de mesure 10 de la teneur en oxydes d'azote, ce moyen de mesure 10 étant avantageusement une sonde à oxydes d'azote ou sonde NOx disposée en aval du filtre à particules 6, donc en sortie de la ligne 2 d'échappement.

Comme le filtre à particules 6 retient les particules et s'encrasse rapidement, il est nécessaire de le régénérer fréquemment, en général tous les 300 ou 500 kms parcourus. La phase de régénération consiste à porter le filtre à particules à très haute température, le substrat du filtre étant porté à plus de 550°C. Les particules contenues dans le substrat et l'encrassant sont alors brûlées, transformées en gaz et peuvent passer à travers le substrat vers la sortie de la ligne 2 d'échappement.

Le système SCR comprend ou est connecté à un calculateur qui détermine une quantité cible de réducteur SCR injectée dans la ligne d'échappement. Cette quantité cible est déterminée selon le fonctionnement du moteur à l'aide d'une cartographie d'injection préalablement établie.

Cependant, un système SCR, pour différentes raisons, notamment du fait de son vieillissement, présente des performances qui évoluent au cours du temps, en général dans le sens d'une diminution de son efficacité. Ceci a pour conséquence que la quantité de réducteur SCR cible préalablement calculée peut ne plus correspondre à la quantité de réducteur SCR à injecter effectivement pour obtenir un bon fonctionnement du système SCR de dépollution.

La quantité cible peut en effet être inférieure ou supérieure à celle qui devrait être effectivement injectée. Quand la quantité cible est inférieure, la dépollution en oxydes d'azote n'est plus optimale du fait d'un manque de réducteur SCR. Quand la quantité cible est supérieure, il y a trop de réducteur SCR apporté au catalyseur SCR 5, ce qui entraîne une dépense inutile en réducteur SCR ainsi qu'une pollution de l'environnement par ce réducteur, ce réducteur étant le plus fréquemment de l'ammoniac ou un dérivé de l'ammoniac. Ceci a pour conséquence une mauvaise maîtrise de la quantité de réducteur injectée, plus généralement un défaut d'efficacité de la fonction dépollution qui n'a pas encore été effectivement diagnostiqué selon l'état de la technique le plus proche.

De manière schématique, le procédé de détection d'un dysfonctionnement d'un système SCR selon l'invention peut être décomposé en trois étapes : la détection d'une dérive entre quantités cibles et quantités de réducteur SCR estimées avoir été injectées, l'identification de la cause de cette dérive et la correction à appliquer dans le calcul des quantités cibles.

L'étape de détection se compose d'une première sous-étape de détection proprement dite de la quantité de réducteur SCR effectivement injectée. Ceci est fait au moins par le moyen de mesure 10 d'oxydes d'azote en sortie du système SCR 5, dans le mode de réalisation de la figure 1 en sortie de filtre à particules 6, le système SCR 5 étant intégré dans le filtre à particules 6 dans le mode de réalisation de la figure 1.

Le moyen de mesure 10 est avantageusement une sonde NOx. Cette sonde 10 peut mesurer une teneur en oxydes d'azote restant dans les gaz et en conséquence calculer une quantité de réducteur SCR effectivement injectée.

Par exemple, à partir d'une teneur élevée en oxydes d'azote relevée par le moyen de mesure 10, ce qui correspond à une dépollution en oxydes d'azote déficiente, la mesure du moyen de mesure 10 peut permettre d'estimer une quantité de réducteur SCR estimée avoir été injectée à partir de la mesure en oxydes d'azote et de la quantité cible.

Avantageusement, le moyen de mesure 10 peut être une sonde NOx de détection d'oxydes d'azote pouvant aussi déterminer une teneur d'ammoniac rejeté, cette sonde pouvant présenter une non-sélectivité de l'ammoniac et des oxydes d'azote. Une telle sonde 10 est particulièrement appropriée quand il y a un surplus de réducteur SCR injecté et non consommé. Une telle détection est rendue possible, étant donné que la teneur en ammoniac non utilisée n'est pas très élevée et qu'il n'y a donc pas de risque de saturation de la sonde 10. Il est alors possible de calculer la quantité de réducteur SCR estimée avoir été injectée qui est supérieure à la quantité cible pour un bon fonctionnement du système SCR.

L'étape de détection se compose d'une deuxième sous-étape pendant laquelle, dans un intervalle compris entre deux régénérations du filtre à particules 6, il est procédé au recensement du nombre de points de mesure de quantité de réducteur estimée avoir été injectée se trouvant en dehors d'une plage prédéterminée autour de ladite quantité cible alors en application.

En effet, en fonction de la demande du moteur, le calculateur du système SCR détermine la quantité cible de réducteur SCR à injecter pour traiter les gaz d'échappement. Mais cette quantité cible calculée ne tient évidemment pas compte des éventuelles dérives du système SCR. Ainsi, il semble intéressant de comptabiliser, entre deux régénérations consécutives, qui se font tous les 300 à 500 kms environ, le nombre d'occurrences au cours desquelles les quantités de réducteur SCR estimées avoir été injectées dérivent de la quantité cible alors en application, ceci en dehors d'une plage prédéterminée autour de cette quantité cible.

Avantageusement, la plage prédéterminée autour de la quantité cible est de plus de +/-10 %. C'est en effet ce critère qui est utilisé en conception pour définir la tolérance acceptable sur la quantité injectée, grâce à l'écart enregistré sur la mesure du capteur NOx en tant que moyen de mesure 10 des NOx.

La figure 2 illustre cette deuxième sous-étape de détection des dérives entre quantités cibles et quantités de réducteur SCR estimées avoir été injectées. Le questionnement référencé 11 est le suivant : « Est-ce qu'une mesure de la quantité estimée avoir été injectée est en dehors de la plage prédéterminée autour de la quantité cible ? ».

Si la réponse à cette question est oui, ce qui est symbolisé par la sortie O du questionnement 11, il est passé à la troisième sous-étape de l'étape de détection du procédé. Si la réponse à cette question est non, ce qui est symbolisé par la sortie N du questionnement 11, il est retourné en début de procédé.

La troisième sous-étape du procédé selon l'invention consiste dans le calcul du pourcentage du nombre de ces points de mesure en dehors de la plage prédéterminée par rapport au nombre total de points de mesure effectués pendant l'intervalle de régénération. Ceci est montré par le questionnement 12 suivant: «Le pourcentage du nombre de ces points de mesure en dehors de la plage prédéterminée par rapport au nombre total de points de mesure effectués pendant l'intervalle de régénération est-il supérieur à un pourcentage maximal prédéterminé ? ».

Si la réponse à ce questionnement 12 est oui, ce qui est symbolisé par la sortie O du questionnement 12, il est passé à la seconde étape du procédé de détection qui concerne la recherche de la cause du dysfonctionnement du système SCR. Si la réponse à ce questionnement 12 est non, symbolisée par la sortie N, il est retourné en tout début de procédé.

Avantageusement, le pourcentage maximal prédéterminé est de 5%. Une autre manière d'énoncer le questionnement 12 est de considérer qu'une régénération se fait tous les 500 km et qu'il est procédé à environ 1.600.000 injections de quantité de réducteur SCR pendant 20.000 kms, soit 40.000 pendant 500 km, c'est-à-dire la distance parcourue entre deux régénérations. De ce fait, le pourcentage maximal prédéterminé qui est de 5% correspond à un nombre de 40.000 fois 5/100, c'est-à-dire 2.000 mesures de quantité estimée avoir été injectée hors de la plage prédéterminée, le dépassement de ces 2.000 mesures impliquant le passage à la seconde étape du procédé.

Lors de la seconde étape du procédé de détection qui est l'étape de recherche de la cause du dysfonctionnement, la recherche se fait juste après une régénération du filtre à particules 6 et consiste en une comparaison de points de mesure sur une sélection de points de mesure avant et après la régénération du filtre à particules.

L'avantage de lancer la stratégie d'identification après une régénération permet de reconnaître entre les deux seules causes possibles de dérive, à savoir, d'une part, un vieillissement et/ou un endommagement du système SCR et, d'autre part, un encrassement du système SCR, laquelle de ces deux causes est réellement la cause de la dérive. En effet, la régénération donne la possibilité, en surchauffant notamment le système SCR de par la surchauffe du filtre à particules 6, de nettoyer les éventuels amas de résidus de décomposition de l'agent réducteur SCR, par exemple d'AdBlue® dans le système SCR, notamment dans l'injecteur 8 et/ou la boîte de mélange 9. Cela permet donc de déterminer si la dérive était due ou non à la seconde cause possible de dérive, c'est-à-dire l'encrassement. En pratique, après une régénération, il est possible de surveiller l'évolution de la dérive mesurée par le moyen de mesure 10 ou sonde à NOx par rapport aux mesures faites avant la régénération. Avantageusement, ceci est fait sur certains points, notamment les points de mesure précédemment identifiés comme hors de la plage prédéterminée.

Le questionnement référencé 13 prenant place au début de cette seconde étape en tant que première sous-étape est le suivant : «La régénération du filtre à particules est-elle terminée ? ». Ce questionnement est le préalable avant de lancer la comparaison de points de mesure respectivement avant et après la régénération du filtre à particules 6.

Si la réponse à ce questionnement 13 est non, symbolisée par la sortie N, il est retourné au début de cette seconde étape et le questionnement 13 est reposé. Si la réponse à ce questionnement 13 est oui, symbolisée par la sortie O du questionnement 13, il est passé à la seconde sous-étape de comparaison de points de mesure sur une sélection de points de mesure avant et après la régénération du filtre à particules 6. Il peut, par exemple, être comparé un point de mesure avant régénération avec un point de mesure après régénération, ces points de mesure étant effectués sensiblement pour les mêmes conditions de fonctionnement du moteur, donc en ayant une valeur cible sensiblement équivalente et étant donc comparables.

Ceci est fait lors du questionnement référencé 14 : « Les quantités de réducteur estimées avoir été injectées aux points de mesure respectivement avant et après régénération sont-elles sensiblement les mêmes ? ». S'il y a un changement entre les points de mesure comparés avant et après la régénération du filtre à particules 6, ceci étant symbolisé par la sortie N du questionnement 14 et donc que les quantités de réducteur estimées avoir été injectées avant et après régénération ne sont pas les mêmes, c'est que la régénération a eu un impact sur la dérive du système SCR et que donc la cause du dysfonctionnement était seulement due à un encrassage d'un ou de plusieurs éléments du système SCR. Après régénération du filtre à particules 6, cet encrassage a été éliminé. Dans ce cas, il est retourné au tout début du procédé de correction à sa première étape pour une réinitialisation du procédé de détection selon la présente invention.

Si il n'y a pas de changement entre les points de mesure comparés avant et après la régénération du filtre à particules 6 pour les quantités estimées avoir été injectées, ce qui est symbolisé par la sortie O du questionnement 14, c'est que la régénération n'a eu que peu d'impact ou aucun impact sur la dérive du système SCR. Il en est déduit que la cause du dysfonctionnement du système SCR n'était pas due ou n'était due que très partiellement à un encrassage d'un ou de plusieurs éléments du système. Dans ce cas, le procédé de détection se poursuit par sa troisième étape qui concerne la correction à appliquer dans le calcul des quantités cibles.

La troisième étape du procédé de détection concerne la correction à appliquer dans le calcul des quantités cibles, ceci lors de la réactualisation de la cartographie contenue dans le calculateur du système SCR. Lors de cette troisième étape, il est procédé à la réactualisation dans la cartographie d'injection des quantités de réducteur cibles dans le sens d'une diminution du nombre de points de mesure se trouvant en dehors de la plage prédéterminée.

Avantageusement, la réactualisation de la cartographie à l'état du système SCR s'effectue quand les points de mesure atteignent un nombre prédéterminé de points contenus dans la cartographie, la dérive moyenne des quantités estimées en dehors de la plage prédéterminée par rapport à la quantité cible alors en application étant calculée et les quantités cibles de la cartographie étant réactualisées en leur ajoutant l'inverse de cette dérive moyenne.

Le nombre prédéterminé de points contenus à atteindre peut être avantageusement égal au quart du total des points contenus dans la cartographie, sous condition d'une dispersion suffisante des points de mesure, afin que la correction puisse être représentative. Pour ce faire, il est donc procédé à un questionnement 15 : « Le nombre prédéterminé de points contenus dans la cartographie a t'il été atteint ? ».

Si la réponse à ce questionnement 15 est non, symbolisée par la sortie N, il est retourné en début du questionnement 15 jusqu'à ce que ce nombre prédéterminé de points dans la cartographie soit atteint.

Si la réponse à ce questionnement 15 est oui, symbolisée par la sortie O, il est procédé à la référence 16 à une réactualisation de la cartographie. Cette réactualisation peut consister dans le calcul de la dérive moyenne des points de mesure correspondant à une quantité estimée avoir été injectée se trouvant en dehors de la plage prédéterminée autour de la quantité cible. Les quantités cibles sont alors réactualisées en leur ajoutant respectivement l'inverse de cette dérive moyenne, c'est-à-dire en leur soustrayant cette dérive moyenne quand la dérive moyenne est positive ou en leur ajoutant la valeur absolue de cette dérive moyenne quand la dérive moyenne est négative. Ainsi, le nombre de points en dehors de la plage prédéterminée autour d'une valeur cible diminue.

La présente invention concerne aussi une ligne d'échappement telle que précédemment décrite, caractérisée en ce qu'un dysfonctionnement de son système SCR est détecté par un procédé de détection tel qu'exposé ci-dessus.

L'invention n'est nullement limitée aux modes de réalisation décrits et illustrés qui n'ont été donnés qu'à titre d'exemples.

## Revendications

1. Procédé de détection d'un dysfonctionnement d'un système de réduction catalytique sélective « SCR » à agent réducteur liquide équipant une ligne (2) d'échappement d'un véhicule automobile, la ligne (2) d'échappement comprenant en outre un filtre à particules (6) régénéré à intervalles réguliers, des quantités cibles de réducteur SCR à injecter dans la ligne (2) d'échappement étant déterminées en relation avec le fonctionnement du moteur à l'aide d'une cartographie d'injection, **caractérisé en ce qu'**il est procédé :
- dans un intervalle compris entre deux régénérations, au recensement du nombre de points de mesure de quantité de réducteur estimée avoir été injectée se trouvant en dehors d'une plage prédéterminée autour de la quantité cible alors en application, les quantités de réducteur estimées avoir été injectées étant mesurées au moins en fonction de la teneur en oxydes d'azote en sortie du système SCR,
- à la détermination d'un pourcentage du nombre de ces points de mesure en dehors de la plage prédéterminée par rapport au nombre total de points de mesure effectués pendant l'intervalle de régénération,
- si ce pourcentage dépasse un pourcentage maximal prédéterminé, recherche de la cause du dysfonctionnement du système SCR,
- la recherche se faisant juste après une régénération du filtre à particules (6) et consistant en une comparaison de points de mesure sur une sélection de points de mesure avant et après la régénération du filtre à particules (6),
- si les quantités de réducteur estimées avoir été injectées aux points de mesure avant et après régénération sont les mêmes, réactualisation dans la cartographie d'injection des quantités cibles dans le sens d'une diminution du nombre de points de mesure en dehors de la plage prédéterminée.

2. Procédé selon la revendication 1, dans lequel la réactualisation de la cartographie s'effectue quand les points de mesure atteignent un nombre prédéterminé de points contenus dans la cartographie, la dérive moyenne des quantités estimées en dehors de la plage prédéterminée par rapport à la quantité cible alors en application étant calculée et les quantités cibles de la cartographie étant réactualisées en leur ajoutant l'inverse de cette dérive moyenne.

3. Procédé selon la revendication 2, dans lequel le nombre prédéterminé de points de mesure est égal au quart du total des points contenus dans la cartographie, sous condition d'une dispersion suffisante des points de mesure.

4. Procédé selon l'une quelconque des revendications précédentes, dans lequel la plage prédéterminée autour de la quantité cible correspond à l'erreur absolue acceptable pour l'injection d'une quantité de réducteur SCR.

5. Procédé selon l'une quelconque des revendications précédentes, dans lequel le pourcentage maximal prédéterminé est de 5 %.

6. Procédé selon l'une quelconque des revendications précédentes, dans lequel la sélection de points de mesure avant et après la régénération du filtre à particules (6) est faite parmi les points de mesure de quantité de réducteur estimée avoir été injectée différant de la quantité cible en application.

7. Procédé selon l'une des revendications 1 à 5, dans lequel la sélection de points de mesure avant et après la régénération du filtre à particules (6) est faite parmi les points de mesure de quantité de réducteur SCR estimée avoir été injectée se trouvant en dehors de la plage prédéterminée autour de la quantité cible en application.

8. Ligne (2) d'échappement d'un véhicule automobile, présentant des moyens de dépollution des gaz d'échappement comprenant un filtre à particules (6), un catalyseur de réduction sélective SCR (5) à réducteur liquide et au moins une sonde à oxydes d'azote (10) aussi appelée sonde à NOx disposée en aval du catalyseur SCR (5) dans la ligne (2) d'échappement, le catalyseur SCR (6) faisant partie d'un système SCR comprenant aussi une réserve de liquide SCR (7) et un injecteur (8) pour l'introduction de réducteur liquide dans la ligne (2) d'échappement en amont du catalyseur SCR (5), le système SCR comprenant aussi un calculateur configuré pour la détermination de quantités cibles de réducteur SCR à injecter dans la ligne (2) d'échappement en relation avec le fonctionnement du moteur à l'aide d'une cartographie d'injection, **caractérisée en ce que** le calculateur est configuré pour réaliser en outre une détection d'un dysfonctionnement du système SCR conformément à un procédé selon l'une quelconque des revendications précédentes.

9. Ligne (2) d'échappement selon la revendication 8, pour laquelle le filtre à particules (6) et le catalyseur SCR (5) sont regroupés dans un même ensemble.

10. Ligne (2) d'échappement selon la revendication 9, pour laquelle le substrat poreux servant de filtre au filtre à particules (6) est imprégné par la phase active du catalyseur SCR (5) sur laquelle s'effectue l'élimination des oxydes d'azote sous l'action d'ajout de réducteur SCR dans le catalyseur (5).

## Patentansprüche

1. Verfahren zur Erkennung einer Fehlfunktion eines Systems für selektive katalytische Reduktion "SCR" mit flüssigem Reduktionsmittel, das einen Abgasstrang (2) eines Kraftfahrzeugs ausstattet, wobei der Abgasstrang (2) außerdem ein Partikelfilter (6) umfasst, das in regelmäßigen Abständen regeneriert wird, wobei Zielmengen an SCR-Reduktionsmittel, die in den Abgasstrang (2) in Verbindung mit dem Betrieb des Motors einzuspritzen sind, mit Hilfe einer Einspritzkartographie bestimmt werden, **dadurch gekennzeichnet dass** wie folgt vorgegangen wird:
- in einem Intervall, das zwischen zwei Regenerierungen liegt, Erheben der Anzahl Reduktionsmittel-Messstellen mit einer Reduktionsmittelmenge, die schätzungsweise eingespritzt wurde, die außerhalb eines vorbestimmten Bereichs liegt, um den die Zielmenge, die gerade gilt, liegt, wobei die Reduktionsmittelmengen, die schätzungsweise eingespritzt wurden, mindestens in Abhängigkeit von dem Stickstoffoxidgehalt am Ausgang des SCR-Systems gemessen werden,
- Bestimmen eines Prozentsatzes der Anzahl dieser Messstellen außerhalb des vorbestimmten Bereichs im Vergleich zu der Gesamtanzahl von Messstellen, die während des Regenerierungsintervalls ausgeführt wurde,
- falls dieser Prozentsatz einen vorbestimmten maximalen Prozentsatz überschreitet, Erforschen der Ursache der Fehlfunktion des SCR-Systems,
- wobei das Erforschen gleich nach einer Regenerierung des Partikelfilters (6) erfolgt und aus einem Vergleich von Messstellen auf einer Auswahl von Messstellen vor und nach der Regenerierung des Partikelfilters (6) besteht,
- falls die schätzungsweise an den Messstellen vor und nach der Regenerierung eingespritzten Reduktionsmittelmengen gleich sind, Aktualisieren der Zielmengen in der Einspritzkartographie in die Richtung einer Verringerung der Anzahl von Messstellen außerhalb des vorbestimmten Bereichs.

2. Verfahren nach Anspruch 1, wobei die Aktualisierung der Kartographie erfolgt, wenn die Messstellen eine vorbestimmte Anzahl von Stellen, die in der Kartographie enthalten ist, erreichen, wobei die mittlere Abweichung der geschätzten Mengen außerhalb des vorbestimmten Bereichs im Vergleich zu der Zielmenge, die gerade gilt, berechnet wird, und die Zielmengen der Kartographie aktualisiert werden, indem der Kehrwert dieser mittleren Drift hinzugefügt wird.

3. Verfahren nach Anspruch 2, wobei die vorbestimmte Anzahl von Messstellen gleich dem Viertel der Summe der Stellen ist, die in der Kartographie enthalten ist, unter Voraussetzung einer ausreichenden Streuung der Messstellen.

4. Verfahren nach einem der vorhergehenden Ansprüche, wobei der vorbestimmte Bereich um die Zielmenge dem zulässigen absoluten Fehler für die Einspritzung einer SCR-Reduktionsmittelmenge entspricht.

5. Verfahren nach einem der vorhergehenden Ansprüche, wobei der vorbestimmte maximale Prozentsatz 5 % beträgt.

6. Verfahren nach einem der vorhergehenden Ansprüche, wobei die Auswahl der Messstellen vor und nach der Regenerierung des Partikelfilters (6) aus den Messstellen mit schätzungsweise eingespritzter Reduktionsmittelmenge, die sich von der geltenden Zielmenge unterscheidet, erfolgt.

7. Verfahren nach einem der Ansprüche 1 bis 5, wobei die Auswahl von Messstellen vor und nach der Regenerierung des Partikelfilters (6) aus den Messstellen mit schätzungsweise eingespritzter SCR-Reduktionsmittelmenge, die außerhalb des vorbestimmten Bereichs um die geltende Zielmenge liegt, erfolgt.

8. Abgasstrang (2) eines Kraftfahrzeugs, der Abgas-Reinigungsmittel aufweist, die ein Partikelfilter (6), einen Katalysator zur selektiven Reduktion SCR (5) mit flüssigem Reduktionsmittel und mindestens eine Stickstoffsonde (10), auch NOx-Sonde genannt, die stromabwärts des SCR-Katalysators (5) in dem Abgasstrang (2) angeordnet ist, umfasst, wobei der SCR-Katalysator (6) zu einem SCR-System gehört, das auch eine SCR-Flüssigkeitsreserve (7) und eine Düse (8) zum Einführen von Reduktionsflüssigkeit in den Abgasstrang (2) stromaufwärts des SCR-Katalysators (5) umfasst, wobei das SCR-System auch einen Rechner umfasst, der zum Bestimmen der SCR-Reduktionsmittel-Zielmengen, die in den Abgasstrang (2) in Zusammenhang mit dem Betrieb der Maschine mit Hilfe einer Einspritzkartographie konfiguriert ist, einzuspritzen sind, **dadurch gekennzeichnet, dass** der Rechner konfiguriert ist, um außerdem eine Erkennung einer Fehlfunktion des SCR-Systems gemäß einem Verfahren nach einem der vorhergehenden Ansprüche auszuführen.

9. Abgasstrang (2) nach Anspruch 8, für den das Partikelfilter (6) und der SCR-Katalysator (5) in ein und derselben Einheit gruppiert sind.

10. Abgasstrang (2) nach Anspruch 9, für den das porige Substrat, das dem Partikelfilter (6) als Filter dient, von der aktiven Phase des SCR-Katalysators (5), auf dem das Eliminieren der Stickstoffoxide unter der Einwirkung einer Hinzufügung von SCR-Reduktionsmittel in den Katalysator (5) erfolgt, getränkt ist.

## Claims

1. A method for detecting a malfunction of a selective catalytic reduction system "SCR" with liquid reducing agent equipping an exhaust line (2) of a motor vehicle, the exhaust line (2) further including a particle filter (6) regenerated at regular intervals, target quantities of SCR reducer to be injected into the exhaust line (2) being determined in relation to the functioning of the engine by means of an injection mapping, **characterized in that** there is carried out:
- in an interval comprised between two regenerations, a count of the number of measurement points of quantity of reducer estimated to have been injected located beyond a predetermined range around the target quantity then in application, the estimated quantities of reducer having been injected being measured at least as a function of the content of nitrogen oxides at the outlet of the SCR system,
- the determining of a percentage of the number of these measurement points beyond the predetermined range with respect to the total number of measurement points effected during the regeneration interval,
- if this percentage exceeds a maximum predetermined percentage, search for the cause of the malfunction of the SCR system,
- the search being carried out just after a regeneration of the particle filter (6) and consisting in a comparison of measurement points on a selection of measurement points before and after the regeneration of the particle filter (6),
- if the estimated quantities of reducer having been injected at the measurement points before and after regeneration are the same, updating in the mapping of injection of the target quantities in the sense of a reduction of the number of measurement points beyond the predetermined range.

2. The method according to claim 1, in which the updating of the mapping is carried out when the measurement points reach a predetermined number of points contained in the mapping, the average drift of the estimated quantities beyond the predetermined range with respect to the target quantity then application being calculated and the target quantities of the mapping being updated by adding to them the inverse of this average drift.

3. The method according to claim 2, in which the predetermined number of measurement points is equal to quarter of the total of the points contained in the mapping, under condition of a sufficient dispersion of measurement points.

4. The method according to any one of the preceding claims, in which the predetermined range around the target quantity corresponds to the absolute acceptable error for the injection of a quantity of SCR reducer.

5. The method according to any one of the preceding claims, in which the maximum predetermined percentage is 5 %.

6. The method according to any one of the preceding claims, in which the selection of measurement points before and after the regeneration of the particle filter (6) is made from the measurement points of estimated quantity of reducer having been injected differing from the target quantity in application.

7. The method according to one of claims 1 to 5, in which the selection of measurement points before and after the regeneration of the particle filter (6) is made from the measurement points of estimated quantity of SCR reducer having been injected located beyond the predetermined range around the target quantity in application.

8. An exhaust line (2) of a motor vehicle, having means for decontamination of the exhaust gases including a particle filter (6), an SCR selective reduction catalyst (5) with liquid reducer and at least one nitrogen oxide sensor (10), also designated NOx sensor, disposed downstream of the SCR catalyst (5) in the exhaust line (2), the SCR catalyst (6) forming part of an SCR system also including an SCR liquid reserve (7) and an injector (8) for the introduction of liquid reducer in the exhaust line (2) upstream of the SCR catalyst (5), the SCR system also including a computer configured for the determining of target quantities of SCR reducer to be injected in the exhaust line (2) in relation to the functioning of the engine with the aid of an injection mapping, **characterized in that** the computer is configured to realize, in addition, a detection of a malfunction of the SCR system in accordance with a method according to any one of the preceding claims.

9. The exhaust line (2) according to claim 8, for which the particle filter (6) and the SCR catalyst (5) are brought together in the same assembly.

10. The exhaust line (2) according to claim 9, for which the porous substrate serving as filter to the particle filter (6) is impregnated by the active phase of the SCR catalyst (5) on which the elimination of the nitrogen oxides takes place under the action of addition of SCR reducer in the catalyst (5).
